# EUROPÄISCHE PATENTSCHRIFT

(11) **EP 0 763 557 B1**
(45) Veröffentlichungstag und Bekanntmachung des Hinweises auf die Patenterteilung: **12.12.2001**
(21) Anmeldenummer: 96113985.4
(22) Anmeldetag: 02.09.1996
(51) Int. Cl.: C08G 77/08, C08G 77/18

(54) **Verfahren zur Herstellung von Poly(diorganosiloxanen), Mischungen, enthaltend diese Poly(diorganosiloxane) und deren Verwendung**
Method for preparation of polydiorganosiloxanes, compositions containing these and their use
Méthode pour la préparation de polydiorganosiloxanes, compositions les contenant et leur usage

(30) Priorität: 13.09.1995 DE 19533915
(43) Veröffentlichungstag der Anmeldung: 19.03.1997
(73) Patentinhaber: GE Bayer Silicones GmbH & Co. KG, 40699 Erkrath (DE)
(72) Erfinder: Friebe, Robert, Dr., 51373 Leverkusen (DE); Sockel, Karl-Heinz, 51373 Leverkusen (DE)

(56) Entgegenhaltungen:
- EP-A- 0 065 925
- EP-A- 0 133 975
- EP-A- 0 635 553
- EP-A- 0 691 362
- DE-A- 2 935 616
- DE-A- 4 344 664
- US-A- 4 515 932
- US-A- 5 099 051

## Beschreibung

Die vorliegende Erfindung betrifft ein Verfahren zur Herstellung von Poly(diorganosiloxanen) mit Diorganyloxyorganylsilyl- oder Triorganyloxysilyl-Endgruppen durch Umsetzung von α,ω-Dihydroxy-poly(diorganosiloxanen) mit mindestens einem Alkoxysilan in Gegenwart von mindestens einem katalytisch wirkenden Phosphorsäureester, vernetzbare Mischungen, enthaltend Poly(diorganosiloxanen) mit Diorganyloxyorganylsilyl- oder Triorganyloxysilyl-Endgruppen sowie deren Verwendung.

Es sind bereits mehrere Verfahren zur Herstellung der erfindungsgemäßen Polymere bzw. solche Polymere enthaltende Formulierungen beschrieben worden. Diese Polymere werden u. a. zur Herstellung von 1-Komponenten Siliconpasten eingesetzt, im folgenden RTV-1 (Raumtemperatur vulkanisierende 1 Komponenten) Alkoxysysteme genannt, die unter Ausschluß von Feuchtigkeit lagerfähig sind und unter Zutritt von Luftfeuchtigkeit unter Abspaltung von Alkoholen zu Elastomeren aushärten.

In der Literatur werden dabei folgende prinzipielle Wege beschrieben:
1. Die Umsetzung von α,ω-Dihydroxy-poly(diorganosiloxanen) mit Alkoxysilanen in Gegenwart von Katalysatoren und
2. die Umsetzung von α,ω-Dihydroxy-poly(diorganosiloxanen) mit gemischtfunktionellen Alkoxysilanen.

Bei dem ersten beschriebenen Weg sind als Katalysatoren vor allem Amine (EP-A-21 859, EP-A-69 256), Amine im Gemisch mit Metallcarboxylaten (US 3 161 614) sowie Amine im Gemisch mit Lewis-Säuren (EP-A-137 883), Ammoniumcarbamate, bevorzugt (CH₃)₂NH₂OCON(CH₃)₂ (DE-PS 3 523 206) und Hydroxylaminderivate (EP-A-70 786) bekannt. Insbesondere waren dabei Katalysatorgemische bekannt, die neben substituierten Guanidinen und/oder Aminen eine Lewis-Säure wie z.B. H₃PO₄ enthalten (US-A-4 515 932).

Bei diesen beschriebenen Katalysatoren bzw. Katalysatorsystemen sind jedoch lange Reaktionszeiten und hohe Temperaturen erforderlich. Zudem müssen die Katalysatoren in substanziellen Mengen verwendet werden, wobei deren Entfernung aus dem Alkoxysilan-endgestoppten Polymer meist nur schwer oder überhaupt nicht möglich ist.

Eine Reihe dieser Nachteile konnte durch die Verwendung von Alkalimetallhydroxiden als Katalysatoren behoben werden (DE-OS 4 022 661, EP-A-457 693). Hierbei tritt jedoch durch die extreme Aktivierung der Alkoxysilane durch die Hydroxid- bzw. Alkoholationen eine unerwünschte Nebenreaktion auf, die auf Polymerabbau- und Polymerumlagerungsreaktionen beruht. Dies macht es notwendig, den Katalysator nach Ablauf der gewünschten Endstoppungsreaktion schnellstens durch Neutralisation zu deaktivieren.

Im zweiten Weg sind die eingesetzten gemischt-funktionellen Alkoxysilane im Gegensatz zu reinen Triorganyloxy- bzw. Diorganyloxyorganosilanen ausreichend reaktiv, um auch ohne Verwendung von Katalysatoren mit den α,ω-Dihydroxypoly(diorganosiloxanen) zu reagieren. So werden beispielsweise in DE-PS 1 247 646 Alkoxy-amidosilane, in US 3 296 165 Alkoxy-acetoxysilane und Alkoxy-oximosilane in EP-A-98 369 beschrieben. Die Herstellung dieser gemischten Alkoxysilane ist jedoch kostspielig und die Entfernung der Spaltprodukte aus den Polymeren bzw. den entsprechenden RTV-1 Massen schwer bzw. nicht möglich.

Vor allem aus ökonomischen Gründen ist die Umsetzung von α,ω-Dihydroxy-poly(diorgano-siloxanen) mit Alkoxysilanen in Gegenwart geeigneter Katalysatoren dem letztgenannten Verfahren vorzuziehen.

Aufgabe der vorliegenden Erfindung war es daher, ein Verfahren zur Umsetzung von α,ω-Dihydroxy-poly(diorganosiloxanen) mit Alkoxysilanen bereitzustellen, das die Herstellung von Poly(diorganosiloxanen) mit Diorganyloxy-organylsilyl- oder Triorganyloxysilyl-Endgruppen nach kurzer Reaktionszeit bereits bei Raumtemperatur ermöglicht.

Überraschenderweise wurde nun gefunden, daß die Umsetzung von α,ω-Dihydroxy-poly(diorganosiloxanen) mit Alkoxysilanen in Gegenwart von Phosphorsäureestern bereits bei Raumtemperatur innerhalb weniger Minuten zu Alkoxy-endgestoppten Poly(diorganosiloxanen) führt.

Obwohl aus der Literatur bekannt ist, daß Phosphorsäureester, ebenso wie Alkalimetallhydroxide, eine abbauende Wirkung auf Poly(diorganosiloxane) ausüben (DE-PS 26 53 499), gelang es, in Gegenwart der erfindungsgemäßen Katalysatoren α,ω-Dihydroxy-poly(diorganosiloxane) mit Alkoxysilanen zu Diorganyloxy-organylsilyl- oder Triorganyloxysilyl-endgestoppten Polymeren umzusetzen, ohne daß es dabei im Verlauf des Herstellverfahrens zu unerwünschten Polymerabbaureaktionen kommt. Unerwarteterweise konnte festgestellt werden, daß diese Reaktion schon unter milden Bedingungen bei Raumtemperatur innerhalb kurzer Reaktionszeiten zu den gewünschten Produkten führt.

Nach Ablauf der gewünschten Reaktion können die erfindungsgemäßen Phosphorsäureester durch Zugabe geeigneter Verbindungen desaktiviert werden. Dies ist jedoch nur in den Fällen notwendig, in denen es infolge einer Einwirkung der erfindungsgemäßen Phosphorsäureester zu produktschädigenden Umlagerungsreaktionen kommt.

Gegenstand der vorliegenden Erfindung ist daher ein Verfahren zur Herstellung von Poly(diorganosiloxanen) mit Diorganyloxy-organylsilyl- oder Triorganyloxysilyl-Endgruppen durch Umsetzung von α,ω-Dihydroxy-poly(diorganosiloxanen) mit mindestens einem Alkoxysilan, wobei mindestens ein Phosphorsäureester als Katalysator eingesetzt wird.

Für das erfindungsgemäße Verfahren sind alle bekannten α,ω-Dihydroxy-poly-(diorganosiloxane) geeignet, wobei die Organylreste C₁-C₁₈-Alkylreste, bevorzugt Methylreste sind. Die Methylreste können teilweise durch Vinyl-, Phenyl-, C₂-C₈-Alkyl- oder Halogenalkylgruppen ersetzt sein. Die Poly(diorganosiloxane) sind im wesentlichen linear, können jedoch auch Anteile an verzweigend wirkenden Organosiloxyeinheiten enthalten. Zudem kann das Poly(diorganosiloxan) partiell durch unreaktive Reste, wie beispielsweise Trimethylsiloxyreste, substituiert sein. In einer bevorzugten Ausführungsform der vorliegenden Erfindung besitzen die α,ω-Dihydroxy-poly(diorganosiloxane) eine Viskosität zwischen 0,1 und 1000 Pas, vorzugsweise zwischen 10 und 500 Pas.

Als Alkoxysilan wird im Sinne der Erfindung ein Alkoxysilan oder ein Gemisch aus mehreren Alkoxysilanen der Formel (I)

R² ₙSi(OR¹)₄₋ₙ (I)

eingesetzt, worin
- R¹: einen gegebenenfalls substituierten C₁-C₆-Alkyl-, C₂-C₈-Alkoxyalkyl- oder C₅-C₇-cycloaliphatischen Kohlenwasserstoffrest,
- R²: einen gegebenenfalls substituierten C₁-C₁₀-Alkyl-, C₂-C₁₀-Alkenyl-, Phenyl- oder substituierte Phenylreste,
- n: 0, 1, oder 2 bedeutet.

Besonders bevorzugt sind als Alkoxysilan Tetraethoxysilan, Tetramethoxysilan, Methyltrimethoxysilan, Methyltriethoxysilan, Vinyltriethoxysilan, Vinyltriisopropoxysilan und/oder Vinyltrimethoxysilan.

Geeignet sind ebenfalls an der Alkylgruppe substituierte Alkoxysilane, wie z.B.

X-CH₂-CH₂-CH₂-Si(OR¹)₃ (II)

mit
X = HS-, H₂N-, R₂N-, H₂NCH₂CH₂NH-, Cl- und anderen Substituenten.

Einige dieser Verbindungen, beispielsweise die Aminoalkylalkoxysilane, reagieren auch schon ohne die erfindungsgemäßen Katalysatoren mit den α,ω-Dihydroxypoly(diorganosiloxanen), jedoch kann durch die Anwesenheit der erfindungsgemäßen Katalysatoren die Reaktionszeiten verkürzt bzw. die Reaktionstemperaturen gesenkt werden, was Vorteile bei der weiteren Verarbeitung der Produkte bringt.

Es können auch teilhydrolisierte Alkoxysilane in dem erfindungsgemäßen Verfahren eingesetzt werden.

Vorzugsweise werden α,ω-Dihydroxypolydiorganosiloxan und Alkoxysilan mit mindestens molarem Verhältnis, bezogen auf den SiOH-Gehalt, eingesetzt.

Als Katalysatoren im Sinne der Erfindung werden vorzugsweise mindestens ein Ester der Orthophosphorsäure der folgenden Formel (III)

O=P(OR³)₃₋ₘ(OH)ₘ (III),

mit
- m =: 0, 1 oder 2, bevorzugt m = 1,
- R³: die Bedeutung eines gegebenenfalls substituierten linearen oder verzweigten C₁-C₃₀-Alkyl-, C₂-C₃₀-Alkenyl- oder Alkoxyalkyl, C₅-C₁₄-Cycloalkyl- oder Arylrestes oder ein Triorganylsilyl- oder Diorganylalkoxysilylrestes hat, der innerhalb des Moleküls gleich oder verschieden sein kann,
und/oder mindestens einen Ester der Polyphosphorsäure, eingesetzt.

Neben den Estern der Orthophosphorsäure und/oder den Estern der Polyphosphorsäure kann zudem Orthophosphorsäure vorhanden sein.

In einer bevorzugten Ausführungsform der vorliegenden Erfindung sind die Phosphorsäureester Ester der Orthophosphorsäure mit mindestens einem gegebenfalls substituierten linearen oder verzweigten C₄-C₃₀-Alkylrest R³.

Besonders bevorzugte Phosphorsäurester sind primäre und sekundäre Ester der Orthophosphorsäure wie Dibutylphosphat, Di-(2-ethylhexyl)-phosphat, Dihexadecylphosphat, Diisononylphosphat, Mono-isodecylphosphat, Mono-(2-ethylhexyl)-phosphat und Di-(trimethylsilyl)-phosphat sowie tertiäre Ester, wie Tris-(trimethylsilyl)-phosphat, Tributylphosphat und Trioctylphosphat, die einzeln oder im Gemisch eingesetzt werden können.

Es können ebenfalls Ester der Polyphosphorsäure oder Gemische aus mehreren Polyphosphorsäureestern und/oder Orthophosphorsäureestern eingesetzt werden. Einsetzbar sind ebenfalls saure oder neutrale Salze der Ortho- und Polyphosphorsäureester wie z.B. Alkalimetallsalze.

Die Menge des Phosphorsäureesters ist abhängig von dem eingesetzten α,ω-Di-hydroxy(polysiloxan) und dem Alkoxysilan. Vorzugsweise werden diese in Konzentrationen von 0,1-5 %, vorzugsweise 0,5-2 %, bezogen auf die Gesamtmischung, eingesetzt.

In einer bevorzugten Ausführungsform der vorliegenden Erfindung werden die sauren Phosphorsäureester nach Herstellung der Alkoxy-endgestoppten Polymere durch geeignete Verbindungen desaktiviert, um einen unerwünschten Abbau der Polymere zu vermeiden.

Die Desaktivierung kann mittels Neutralisation, Komplexbildung oder sonstigen Reaktionen erfolgen.

Zur Desaktivierung der Phosphorsäureester eignen sich vorzugsweise alle starken und schwachen Basen wie Alkalimetallhydroxide und deren Silanolate oder Alkoholate, Tetraalkylammoniumhydroxide und Amine. Beispiele hierfür sind Natriumhydroxid, Kaliummethanolat, Tetrametylammoniumhydroxid, Triethylamin und Hexamethyldisilazan. Geeignet sind weiterhin Metalloxide, -sulfate, -silicate, -carbonate und -hydrogencarbonate. Bevorzugt eingesetzt werden hierbei gefällte und/oder gemahlene Kreiden.

Das erfindungsgemäße Verfahren wird in Abhängigkeit von dem gewünschten Grad der Endstoppung und der Reaktivität des verwendeten Alkoxysilans, vorzugsweise bei Temperaturen zwischen 0 und 100°C, bevorzugt 15 bis 60°C, besonders bevorzugt 18 bis 40°C, ganz besonders bevorzugt bei Raumtemperatur, durchgeführt. Die Reaktionszeit beträgt dabei mindestens 3 Minuten, vorzugsweise 5 bis 30 Minuten.

Gegenstand der vorliegenden Erfindung sind zudem vernetzbare Mischungen, enthaltend Poly(diorganosiloxane) mit Diorganyloxyorganylsilyl- oder Triorganylsilyl-Endgruppen, die nach dem erfindungsgemäßen Verfahren hergestellt und desaktiviert wurden, sowie Katalysatoren und gegebenenfalls Füllstoffe, Weichmacher oder sonstige Zusatzstoffe.

Füllstoffe im Sinne der Erfindung sind beispielsweise verstärkende Füllstoffe, wie z.B. pyrogene Kieselsäure und Ruß, semiverstärkende Füllstoffe, wie z.B. gefällte Kreide und gefällte Kieselsäure, nichtverstärkende Füllstoffe, wie z.B. gemahlene Naturkreide, Quarzmehl, wasserunlösliche Metall-Silicate, Carbonate, Oxide und Sulfate, wobei die eingesetzten Füllstoffe auch oberflächemodifiziert sein können.

Weichmacher im Sinne der Erfindung sind z.B. Polydimethylsiloxane mit Trimethylsiloxyendgruppen und einer Viskosität von 0,1 bis 5 Pas.

Katalysatoren im Sinne der Erfindung sind alle nach dem Stand der Technik in kondensationsvernetzenden Polysiloxanmassen gebräuchlichen Katalysatoren geeignet. Besonders bevorzugt sind organische Titan- und Zinnverbindungen. Besonders bevorzugte Zinnverbindungen sind z.B. Diorganozinndicarboxylate, wie Dibutylzinnlaurat und Dioctylzinnmeleat sowie Lösungen von Diorganozinnoxiden in Kieselsäureestern. Bevorzugte Titanverbindungen sind beispielsweise Alkyltitanate, wie Tetraisopropyltitanat, Tetrabutyltitanat und chelatisierte Titanverbindungen, wie Diisobutyl-bisacetessigsäureethylester-titanat.

Weitere Additive im Sinne der Erfindung sind z.B. Haftmittel, Pigmente und Fungizide. Als Haftmittel bevorzugt sind organofunktionelle Silane der Formeln:

X―CH₂―CH₂―CH₂―Si(OR¹)₃

mit X =

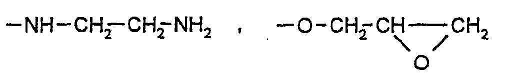

-O―C(O)―C(CH₃)=CH₂, -SH, -OH , -Cl

wobei
- R¹: die zuvor genannte Bedeutung hat.

Zur Herstellung der erfindungsgemäßen vernetzbaren Mischung werden die kettenverlängerten α,ω-Dihydroxypolydiorganosiloxane mit den zusätzlich benötigten Komponenten homogen verrührt.

Zur Herstellung der erfindungsgemäß vemetzbaren Mischungen werden die Poly-(diorganosiloxane) mit Diorganyloxyorganylsilyl- oder Triorganylsilyl-Endgruppen mit den zusätzlich benötigten Komponenten homogen vermischt.

Die Herstellung der RTV-1 Massen kann in allen nach dem Stand der Technik gebräuchlichen Mischaggregaten erfolgen wie z.B. Planetenmischer, Dissolvern, Butterfly-Mischern oder kontinuierlich arbeitenden Mischschnecken.

Gegenstand der vorliegenden Erfindung ist zudem die Verwendung der nach dem erfindungsgemäßen Verfahren hergestellten Poly(diorganosiloxane) mit Diorganyloxyorganylsilyl- oder Triorganyloxysilyl-Endgruppen zur Herstellung von RTV-1 Massen.

Die folgenden Beispiele dienen der Erläuterung der Erfindung ohne jedoch begrenzend zu wirken.

### Beispiele

### Herstellung Alkoxy-endgestoppter Poly(diorganosiloxane)

Zur Überprüfung der Endstoppung wurden die Umsetzungsprodukte der Beispiele folgendermaßen untersucht:
1. Viskositätsmessungen mit einem Haake Rotationsviskosimeter und
2. Vernetzungstest.

Für den unter 2. beschriebenen Vernetzungstest wurden 2,0 Gew.-Teile der zu prüfenden Mischung mit 0,1 Gew.-Teil Tetraisopropyltitanat vermischt. Beobachtet man nach Zugabe des Titanates einen raschen Viskositätsanstieg unter starker Vergelung des Gemisches, so ist dies ein Hinweis auf eine unvollständige Umsetzung der SiOH-Gruppen des verwendeten α,ω-Dihydroxy-poly(diorganosiloxans) zurückzuführen. Wird ein solches Verhalten nicht festgestellt und härtet das Material bei Einwirkung von Luftfeuchtigkeit zu einem Elastomer aus, so kann auf eine erfolgte Endstoppung geschlossen werden.

### Allgemeine Arbeitsweise bei der Herstellung und Beurteilung der RTV-1 Massen

Die Herstellung der RTV-1 Massen erfolgte in einem 11-Plantenmischer entsprechend den im folgenden aufgeführten Beispielen. Nach Abschluß der Herstellung wurden die Massen in Kunststoffkartuschen gefüllt. Aus den verschlossenen Kartuschen wurde Material für die entsprechenden weiteren Prüfungen entnommen.

Das Vernetzungsverhalten der Polysiloxanmassen wurde auf einer Glasplatte geprüft, wozu die Pasten in einer Schichtdicke von 2 mm auf einer Fläche von 40 mal 60 mm aufgetragen wurden. Nach 24 Stunden wurde die Durchhärtung des Material bis zur Glasoberfläche geprüft.

Zur Ermittlung der mechanischen Eigenschaften der Vulkanisate wurden die Pasten in 2 mm dicken Schichten ausgezogen und nach 14-tägiger Aushärtung bei 23°C und 50% relativer Luftfeuchtigkeit nach DIN 53 504 geprüft. Die Härte wurde nach 14 Tagen entsprechend DIN 53 505 ermittelt.

### Beispiel 1

In einem Planetenmischer wurden 100,0 Gew.-Teile eines Polydimethylsiloxans mit Si(CH₃)₂OH-Endgruppen, das eine Viskosität von 50 Pas bei 25°C besaß, mit 1,0 Gew.-Teilen Methyltrimethoxysilan vermischt und 0,72 Gew.-Teilen Di-2-ethylhexylphosphat zugegeben. Die Viskosität der Mischung betrug nach Herstellung 49,3 Pas. Nach 11 Minuten Wartezeit wurde der Vernetzungstest durchgeführt. Es konnte keine Vergelung beobachtet werden. Es wurden 0,23 Gew.-Teile Triethylamin zugegeben und nach 2,5 Stunden wiederum die Viskosität ermittelt, die 49,3 Pas betrug. Aus den Ergebnissen kann auf eine erfolgte Endstoppung geschlossen werden.

### Beispiel 2

Es wurde analog Beispiel 1 verfahren, wobei als Katalysator jedoch 0,4 Gew.- Teile Dibutylphosphat eingesetzt wurden. Die Anfangsviskosität wurde mit 52,1 Pas gemessen. Nach 12 Minuten Wartezeit war der Vernetzungstest negativ, d. h. es konnte keine Vergelung beobachtet werden. Nach der Neutralisation mit Triethylamin wurde nach 69 Minuten 60,4 und nach weiteren 2 Tagen 58,6 Pas ermittelt. Die Ergebnisse bestätigen ein erfolgreiche Endstoppung, ohne das der unerwünschte Polymerabbau (Viskositätsabbau!) erfolgte.

### Beispiel 3

Es wurde analog Beispiel 1 verfahren und als Alkoxysilan 1,1 Gew.-Teile Vinyltrimethoxysilan und als Katalysator 0,72 Gew.-Teile Di-2-ethylhexylphosphat eingesetzt wurden. Die Anfangsviskosität wurde mit 51,1 Pas gemessen. Nach 8 Minuten Wartezeit war der Vernetzungstest negativ. Nach der Neutralisation mit 0,36 Gew.-Teilen Hexamethyldisilazan wurde die Viskosität nach 1 Tag mit 51,1 Pas ermittelt.

### Beispiel 4

Es wurde analog Beispiel 1 verfahren und 1,4 Gew.-Teile Vinyltriethoxysilan, 0,72 Gew.-Teile Di-2-ethylhexylphosphat eingesetzt. Nach 9 Minuten Wartezeit war der Vernetzungstest negativ, d. h. es konnte keine Vergelung beobachtet werden. Anschließend wurde mit 0,36 Gew.-Teilen Hexamethyldisilazan neutralisiert.

### Vergleichsbeispiel 5

Es wurde analog Beispiel 1 verfahren jedoch auf den Zusatz des Katalysators verzichtet. Im Vernetzungstest vergelte die Mischung sehr stark, was auf eine nicht erfolgte Endstoppung schließen läst. Der Versuch zeigt, daß ohne die Verwendung der erfindungsgemäßen Katalysatoren das Alkoxysilan nicht mit dem α,ω-Dihydroxy-poly(diorganosiloxan) reagiert.

### Vergleichsversuch 6

Es wurde analog Beispiel 1 verfahren, wobei jedoch auf eine Neutralisation des Katalysators verzichtet wurde. Der Vernetzungstest wies nach 11 Minuten Wartezeit keine Vergelung aus. Die Anfangsviskosität wurde mit 49,3 Pas gemessen. Nach 1 Stunde betrug die Viskosität 0,2 Pas. Der Versuch zeigt, daß ohne eine Neutralisation des Di-2-ethylhexyl-phosphates ein starker Polymerabbau erfolgt. Das Material härtet nicht mehr aus und ist zur Herstellung von RTV-1 Massen ungeeignet.

### Beispiele 7 bis 9

Die Beispiele sollen zeigen, daß mit Hilfe des erfindungsgemäßen Verfahrens RTV-1 Massen im Eintopfverfahren hergestellt werden können.

In einem Planetenmischer wurden 55 Gew.-Teile eines Polydimethylsiloxans mit Si(CH₃)₂OH-Endgruppen, das eine Viskosität von 80 Pas bei 25°C besaß, 29,0 Gew.-Teile eines Polydimethylsiloxans mit -OSi(CH₃)₃-Endgruppen und einer Viskosität von 100 mPas bei 25°C vorgelegt. Anschließend wurde das Alkoxysilan und der Katalysator entsprechend den in Tabelle 1 angegebenen Mengen zugegeben und nach 10 Minuten Wartezeit der Vernetzungstest durchgeführt. Bei allen durchgeführten Versuchen wurde keine Vergelung beobachtet, was auf eine erfolgreiche Endstoppung schließen läßt. Anschließend wurde durch Zugabe des in Tabelle 1 aufgeführten Amins neutralisiert. Im weiteren wurden 9,5 Gew.-Teile einer hydrophoben Kieselsäure mit einer Oberfläche von 150 m²/g nach BET eingemischt und 0,75 Gew.-Teile Tetraisopropyltitanat zugegeben. Die so hergestellten Massen wurden für weitere Prüfungen verwendet.

Die Pasten härteten innerhalb von 24 Stunden einwandfrei zu Elastomeren aus. Die weiteren Prüfungen wurden entsprechend den angegebenen Methoden durchgeführt und die Ergebnisse können aus Tabelle 1 entnommen werden.

**Tabelle 1:**

| **Prüfergebnisse der Beispiele 7 bis 9 (Angaben in Gew.-Teilen)** | | | |
|---|---|---|---|
| **Beispiel** | **7.** | **8.** | **9.** |
| Vinyltrimethoxysilan | 2,5 | 2,5 | 2,5 |
| Di-(2-ethylhexyl)phosphat | 0,36 | - | - |
| Mono-(2-ethylhexyl)phosphat | - | 0,3 | 0,5 |
| Triethylamin | 0,11 | - | - |
| Hexamethyldisilazan | - | 0,23 | 0,38 |
| | | | |
| **Prüfung nach DIN 53505** | 16 | 16 | 15 |
| Härte [Shore A] | | | |
| | | | |
| **Prüfung nach DIN 53504** | | | |
| Zugfestigkeit [MPa] | 1,25 | 1,75 | 1,76 |
| Bruchdehnung [%] | 685 | 704 | 811 |
| Zugspannung [MPa] | 0,26 | 0,22 | 0,20 |
| (bei 100% Dehnung) | | | |

## Patentansprüche

1. Verfahren zur Herstellung von Poly(diorganosiloxanen) mit Diorganyloxy-organylsilyl- oder Triorganyloxysilyl-Endgruppen durch Umsetzung von α,ω-Dihydroxy-poly(diorganosiloxanen) mit mindestens einem Alkoxysilan, **dadurch gekennzeichnet, daß** mindestens ein Phosphorsäureester als Katalysator eingesetzt wird.

2. Verfahren nach Anspruch 1, **dadurch gekennzeichnet, daß** die eingesetzten α,ω-Dihydroxy-poly(diorganosiloxanen) eine Viskosität zwischen 0,1 und 1000 Pas besitzen.

3. Verfahren nach einem der Ansprüchen 1 bis 2, **dadurch gekennzeichnet, daß** als Alkoxysilan Methyltrimethoxysilan, Methyltriethoxysilan, Vinyltriethoxysilan, Vinyltriisopropoxysilan, Vinyltrimethoxysilan, Tetraethoxysilan und/oderTetramethoxysilan eingesetzt werden.

4. Verfahren nach einem der Ansprüche 1 bis 3, **dadurch gekennzeichnet, daß** als Katalysator mindestens ein Ester der Orthophosphorsäure der allgemeinen Formel
O=P(OR³)₃₋ₘ(OH)ₘ
mit
m = 0, 1 oder 2 und
R3 die Bedeutung eines gegebenenfalls substituierten linearen oder verzweigten, C₁-C₃₀-Alkyl-, C₂-C₃₀-Alkenyl- oder Alkoxyalkyl, C₅-C₁₄-Cycloalkyl- oder Arylrestes oder eines Triorganylsilyl- oder Diorganylalkoxysilylrestes hat, der innerhalb des Moleküls gleich oder verschieden sein kann und/oder mindestens ein Ester der Polyphosphorsäure, eingesetzt wird.

5. Verfahren nach einem der Ansprüche 1 bis 4, **dadurch gekennzeichnet, daß** als Ester der Orthophosphorsäure Dibutylphosphat, Di-(2-ethylhexyl)-phosphat, Dihexadecylphosphat, Diisononylphosphat, Mono-isodecylphosphat, Mono-(2-ethylhexyl)-phosphat, Di-(trimethylsilyl)-phosphat und Tris-(trimethylsilyl)-phosphat und/oder tert. Ester eingesetzt wird.

6. Verfahren nach einem der Ansprüche 1 bis 5, **dadurch gekennzeichnet, daß** die Phosphorsäureester in einer Menge von 0,1-5 %, bezogen auf die Gesamtmischung eingesetzt werden.

7. Verfahren nach einem der Ansprüche 1 bis 6, **dadurch gekennzeichnet, daß** die Phosphorsäureester nach Ablauf der gewünschten Reaktion und vor dem Eintritt von produktschädigenden Umlagerungsreaktionen desaktiviert werden.

8. Vernetzbare Mischungen, enthaltend die noch einem der Ansprüche 1 bis 7 hergestellten Polysiloxane mit Diorganyloxyorganylsilyl- oder Triorganyloxysilyl-Endgruppen sowie Katalysatoren und gegebenenfalls Füllstoffe, Weichmacher oder sonstige Additive.

9. Verwendung nach einem der Ansprüche 1 bis 7 erhaltenen Triorganylsiloxy- bzw. Diorganyloxy-organosilyl-endgestoppten Poly(diorganosiloxans) zur Herstellung von RTV-1 Massen.

## Claims

1. Process for producing poly(diorganosiloxane)s with diorganyloxyorganylsilyl or triorganyloxysilyl end groups by reaction of α,ω-dihydroxypoly(diorganosiloxane)s with at least one alkoxysilane, **characterized in that** at least one phosphoric acid ester is used as a catalyst.

2. Process according to Claim 1, **characterized in that** the α,ω-dihydroxypoly(diorganosiloxane)s used have a viscosity of between 0.1 and 1 000 Pas.

3. Process according to either of Claims 1 and 2, **characterized in that** the alkoxysilane used is methyltrimethoxysilane, methyltriethoxysilane, vinyltriethoxysilane, vinyltriisopropoxysilane, vinyltrimethoxysilane, tetraethoxysilane and/or tetramethoxysilane.

4. Process according to any of Claims 1 to 3,
**characterized in that** the catalyst used is at least one ester of orthophosphoric acid of the general formula
O=P(OR³)₃₋ₘ(OH)ₘ
where
m is 0, 1 or 2 and
R³ is an optionally substituted linear or branched C₁-C₃₀-alkyl, C₂-C₃₀-alkenyl or alkoxyalkyl, C₅-C₁₄-cycloalkyl or aryl radical or a triorganylsilyl or diorganylalkoxysilyl radical which may be identical or different within the molecule and/or at least one ester of polyphosphoric acid.

5. Process according to any of Claims 1 to 4,
**characterized in that** the orthophosphate ester used is dibutyl phosphate, di-(2-ethylhexyl) phosphate, dihexadecyl phosphate, diisononyl phosphate, monoisodecyl phosphate, mono-(2-ethylhexyl) phosphate, di-(trimethylsilyl) phosphate and tris-(trimethylsilyl)phosphate and/or tertiary esters.

6. Process according to any of Claims 1 to 5,
**characterized in that** the phosphoric acid esters are used in a quantity of 0.1-5% relative to the complete mixture.

7. Process according to any of Claims 1 to 6,
**characterized in that** the phosphoric acid esters are deactivated after the desired reaction and before the occurrence of product-damaging rearrangement reactions.

8. Crosslinkable mixtures containing the diorganyloxyorganylsilyl- or triorganyloxysilyl-terminated polysiloxanes produced according to any of Claims 1 to 7 and also catalysts and optionally fillers, plasticizers and other additives.

9. Use of a triorganylsiloxy- or diorganyloxyorganosilyl-end-stopped poly(diorganosiloxane) obtained according to any of Claims 1 to 7 for preparing RTV-1 compositions.

## Revendications

1. Procédé de préparation de poly(diorganosiloxanes) avec des groupes terminaux diorganyloxyorganylsilyle ou triorganyloxysilyle par réaction d'α,ω-dihydroxy-poly(diorganosiloxanes) avec au moins un alcoxysilane, **caractérisé en ce que** l'on utilise au moins un ester phosphorique comme catalyseur.

2. Procédé selon la revendication 1 **caractérisé en ce que** les α,ω-dihydroxy-poly(diorganoslloxanes) utilisés possèdent une viscosité située entre 0,1 et 1000 Pas.

3. Procédé selon l'une des revendications 1 à 2 **caractérisé en ce que** l'on utilise comme alcoxysilane le méthyltriméthoxysilane, le méthyltriéthoxysilane, le vinyltriéthoxysilane, le vinyltriisopropoxysilane, le vinyltriméthoxysilane, le tétraéthoxysilane et/ou le tétraméthoxysilane.

4. Procédé selon l'une des revendications 1 à 3 **caractérisé en ce que** l'on utilise comme catalyseur au moins un ester de l'acide orthophosphorique de formule générale
O=P(OR³)₃₋ₘ(OH)ₘ
avec
m = 0, 1 ou 2 et
R³ représente un reste alkyle en C₁-C₃₀, alcényle en C₂-C₃₀ ou alcoxyalkyle linéaire ou ramifié éventuellement substitué, cycloalkyle en C₅-C₁₄ ou aryle ou un reste triorganylsilyle ou diorganylalcoxysilyle, qui peut être identique ou différent à l'intérieur de la molécule et/ou au moins un ester de l'acide polyphosphorique.

5. Procédé selon l'une des revendications 1 à 4 **caractérisé en ce que** l'on utilise comme esters de l'acide orthophosphorique le phosphate de dibutyle, le phosphate de di-(2-éthylhexyle), le phosphate de dihexadécyle, le phosphate de diisononyle, le phosphate de mono-isodécyle, le phosphate de mono-(2-éthylhexyle), le phosphate de di-(triméthylsilyle) et le phosphate de tris-(triméthylsilyle) et/ou des phosphates tertiaires.

6. Procédé selon l'une des revendications 1 à 5 **caractérisé en ce que** les esters phosphoriques sont utilisés en une quantité de 0,1-5 % par rapport au mélange total.

7. Procédé selon l'une des revendications 1 à 6 **caractérisé en ce que** les esters phosphoriques sont désactivés après le déroulement de la réaction voulue et avant la survenue de réactions de transposition dégradant les produits.

8. Mélanges réticulables contenant les polysiloxanes avec des groupes terminaux diorganyloxyorganylsilyle ou triorganyloxysilyle préparés selon l'une des revendications 1 à 7 ainsi que des catalyseurs et éventuellement des charges, des plastifiants ou d'autres additifs.

9. Utilisation de poly(diorganosiloxanes) à terminaisons triorganylsiloxy ou diorganyloxy-organosilyle obtenus selon l'une des revendications 1 à 7 pour la préparation de masses RTV-1.
